# EUROPÄISCHE PATENTSCHRIFT

(11) **EP 2 428 085 B1**
(45) Veröffentlichungstag und Bekanntmachung des Hinweises auf die Patenterteilung: **01.04.2015**
(21) Anmeldenummer: 10718975.5
(22) Anmeldetag: 07.05.2010
(51) Int. Cl.: H04W 72/08, H04W 72/04, H04W 52/02, H04W 48/12, H04W 84/18

(54) **BEACON FÜR EIN STERNNETZ, SENSORKNOTEN IN EINEM STERNNETZ UND VERFAHREN ZUM BETRIEB EINES STERNNETZES**
BEACON FOR A STAR NETWORK, SENSOR NODES IN A STAR NETWORK AND METHOD FOR OPERATING A STAR NETWORK
BALISE POUR RÉSEAU EN ÉTOILE, NOEUDS CAPTEURS DANS UN RÉSEAU EN ÉTOILE ET PROCÉDÉ D'UTILISATION D'UN RÉSEAU EN ÉTOILE

(30) Priorität: 07.05.2009 DE 102009020206; 05.10.2009 DE 102009048303
(43) Veröffentlichungstag der Anmeldung: 14.03.2012
(73) Patentinhaber: Siemens Aktiengesellschaft, 80333 München (DE)
(72) Erfinder: BAHR, Michael, 81827 München (DE); VICARI, Norbert, 81827 München (DE)
(86) Internationale Anmeldenummer: PCT/EP2010/056248
(87) Internationale Veröffentlichungsnummer: WO 2010/128134

(56) Entgegenhaltungen:
- US-A1- 2003 199 272
- M. BAHR, N. VICARI: "Proposal for Factory Automation (IEEE P801.15-08/0572r0)" IEEE P802.15 WIRELESS PERSONAL AREA NETWORKS (WPANS), [Online] September 2008 (2008-09), Seiten 1-19, XP002591465 Gefunden im Internet: URL:https://mentor.ieee.org/802.15/file/08 /15-08-0572-00-004e-proposal-for-factory-a utomation.doc> [gefunden am 2010-07-09]
- M. BAHR, Z. SAHINOGLU, G. BHATTI: "TG4e drafting - Draft specification for IEEE 802.15.4e Factory Automation" IEEE P802.15 WIRELESS PERSONAL AREA NETWORKS, [Online] 13. Mai 2009 (2009-05-13), Seiten 1-39, XP002591466 Gefunden im Internet: URL:https://mentor.ieee.org/802.15/dcn/09/ 15-09-0401-00-004e-draft-text-for-factory- automation.doc> [gefunden am 2010-07-09]

## Beschreibung

Die Erfindung betrifft ein Beacon für ein Sternnetz mit Sensorknoten und einem Gateway, ein Verfahren zum Betrieb des Sternnetzes sowie ein Sensorknoten.

Die Fertigungsautomatisierung hat sehr hohe Qualitätsanforderungen an drahtlose Netze, insbesondere eine sehr kleine, garantierte Antwortzeit (Knoten möchte ein Datum schicken → Datum ist beim Empfänger angekommen). In der Regel wird versucht, dies mit einem sternförmigen Netz zu erreichen, bei dem ein Zeitschlitzverfahren (TDMA - Time Division Multiple Access) verwendet wird. Der zentrale Knoten des Netzes, das Gateway, gibt dabei einen Superframe vor, der die Zuteilung der Zeitschlitze auf die einzelnen Sensorknoten enthält. Die notwendige Synchronisation der Sensorknoten mit dem Superframe geschieht über das periodische Aussenden von Beacons durch das Gateway zu Beginn eines jeden Superframes. Um die hohen zeitlichen Anforderungen zu erfüllen, wird möglichst viel Zustandsinformation implizit gespeichert, so dass die Datenpakete sehr klein sind (siehe auch M. Bahr, M. Vicari, L. Winkel: Proposal for Factory Automation, IEEE P802.15 Wireless Local Area Networks, document 15-09/0228r0, März 2009 - im Folgenden als Dokument [1] bezeichnet, indem das kleinste MAC-Paket nur 4 Byte groß ist bei einem Byte Nutzlast).

In M. Bahr, N. Vicari: "Proposal for Factory Automation (IEEE P801.15-08/0572r0)", IEEE P0802.15 Wireless Personal Area Networks (WPANs), September 2008 (2008 - 2009), Seiten 1 - 19, im Internet: URL:https://mentor.ieee.org/80215/file/08/15-08-0572-00-004e-proposal-for-factory-automation.doc beschreibt eine Anpassung des 802.15.4 MAC-Übertragungsrahmens (Superframe) für die Funkkommunikation von Aktuatoren und Sensoren in der Fertigungsautomatisierung bestehend aus Beacon und sich anschließenden Zeitschlitzen.

Solch eine Optimierung geht allerdings auf Kosten der Flexibilität. Für ein einziges, festes drahtloses Sternnetz, bei dem die Knoten immer auf die Beacons des Gateways hören, also immer an sind, und auch nie dieses Netz verlassen, also kein Roaming der Sensorknoten zwischen verschiedenen Gateways passiert, klappt das ganz gut.

Allerdings gibt es auch etliche Anwendungsfälle, wo diese Einschränkungen nicht gegeben sind und eine etwas höhere Flexibilität gefordert ist:
- Um Energie zu sparen, schalten sich manche Sensorknoten aus und verpassen dadurch mehrere Beacons.
- Sensorknoten bewegen sich durch die Funkbereiche mehrerer Sternnetze/Gateways (Roaming), zum Beispiel an einem Förderband.

Mit den derzeitigen Mechanismen des oben genannten Dokumentes [1] gibt es dafür keine selbstorganisierenden Methoden, die damit effizient zurecht kommen. Sobald ein Sensorknoten eine gewisse Anzahl von Beacons nicht mitbekommen hat oder in den Bereich eines anderen Gateways gewechselt ist, kann es zu schwerwiegenden Störungen der drahtlosen Datenübertragung kommen:
- Verpasste Beacons: Der Sensorknoten hat eventuell eine neue Konfiguration des Superframes "verschlafen". Da sie ja implizit gespeichert ist, kann er sie nicht aus den Beacons erkennen. Sendet er jetzt mit seiner ihm bekannten Konfiguration, die ja veraltet ist, so kann es zu Datenkollisionen kommen.
- Roaming: Der Sensorknoten weiß nicht, in welchem Sternnetz er sich gerade befindet. Über eine externe Konfiguration können hier zwar Konflikte bei der Datenkommunikation vermieden werden, sie lassen aber oft Ressourcen ungenutzt, da in diesem Fall die gesamte Roaming-Strecke bei der Planung der Superframe-Zuordnungen berücksichtigt werden muss. Eine nur lokale Berücksichtigung der Sternnetze würde hier eine bessere Auslastung der Ressourcen ermöglichen.

Hinzu kommt noch, dass sich im IEEE 802.15.4-2006-Standard (IEEE 802: Part 15.4: Wireless Medium Access Control (MAC) and Physical Layer (PHY) Specifications for Low-Rate Wireless Personal Area Networks (WPANs), IEEE Std 802.15.4™-2006, September 2006 - im Folgenden als Dokument [2] bezeichnet), der die Grundlage für das oben genannte Dokument [1] und diese Erfindung bildet, das Interframe Spacing (IFS), also der Mindestabstand zwischen zwei Paketen, bei MAC-Paketen, die größer als 18 Byte sind, sehr stark verlängert: Von 12 Symbolen (entspricht 6 Bytes) auf 40 Symbole (entspricht 20 Bytes). Das ist ein ungeheurer Zeitverlust, der möglichst vermieden werden sollte, das heißt, das Beacon sollte auf der MAC-Schicht in der Regel ≤ 18 Byte sein.

Sternnetze sind eine beliebte Topologie für drahtlose Netze. Es gibt dabei immer einen zentralen Knoten (Zugangspunkt, Koordinator, Basisstation, Gateway, etc.), mit dem die Endgeräte direkt kommunizieren (Stationen, Clients, Endgeräte, Sensorknoten, etc.).

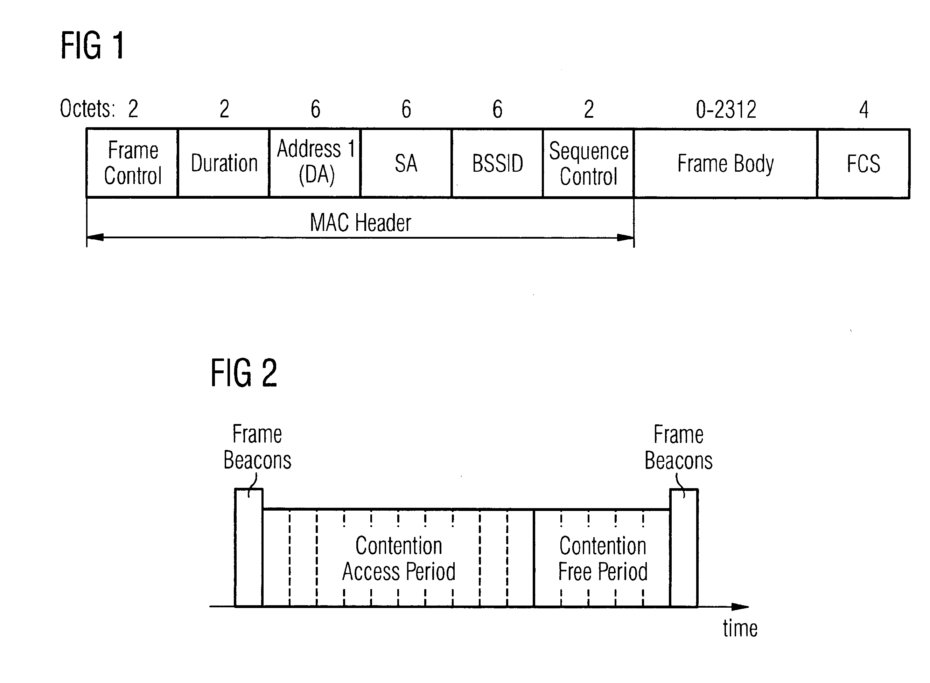

IEEE 802: Part 11: Wireless LAN Medium Access Control (MAC) and Physical Layer (PHY) Specifications, IEEE Std 802.11™-2007, June 2007 - im Folgenden als Dokument [3] bezeichnet - definiert ein Beacon für die Zugangspunkte, so dass WLAN-Stationen diese erkennen können und sich mit ihnen assoziieren können. Die Struktur eines IEEE 802.11-Beacons zeigt Fig. 1. Die Beacons dienen in IEEE 802.11 hauptsächlich dazu, dass die WLAN-Stationen Zugangspunkte erkennen und sich mit ihnen assoziieren können. Der Zugangspunkt kann auch Koordinationsaufgaben übernehmen (Point Coordinator Funktion). Das ist aber kein Zeitschlitzverfahren. Stattdessen werden die Geräte durch den Zugangspunkt (Point Coordinator) explizit abgefragt.

Die einzelnen Felder der in Fig. 1 dargestellten Struktur eines IEEE 802.11-Beacons haben die folgenden Bedeutungen (nur für die Erfindung relevante sind aufgeführt):
- SA: steht für Source Address (Quelladresse) und enthält die MAC-Adresse des Zugangspunktes.
- BSSID: steht für Basic Service Set Identifier und kennzeichnet das Sternnetz. Als BSSID wird die MAC-Adresse des Zugangspunktes verwendet.
- Sequence Control: wird für die Defragmentierung und für die Erkennung mehrfach übermittelter Pakete verwendet. Das Feld besteht aus 4 Bit für die Fragment-Nummer und aus 12 Bit für die Sequenznummer, mit der die verschiedenen Pakete unterschieden werden können.

IEEE 802.11 beruht auf dem CSMA-Verfahren (Carrier Sense Multiple Access), so dass auch neue Geräte eine Chance haben, Daten zu senden. Auch wenn die PCF verwendet wird, gibt es immer eine CSMA-basierte sogenannte Contention Period.

Dokument [2] definiert einen "Beacon-enabled"-Modus, in dem eine Superframe-Struktur definiert ist, die auch Zeitschlitze vorsieht (siehe Fig. 2). Es können bis zu sieben sogenannte "Guaranteed Time Slots (GTS)" pro Superframe durch den Koordinator definiert werden.

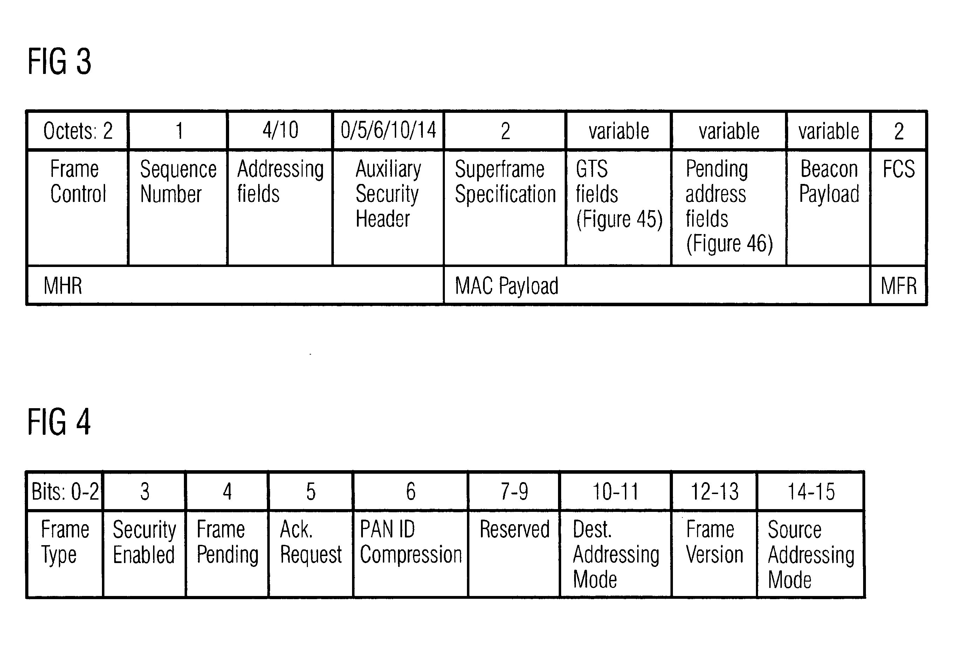

Das Beacon wird vom Koordinator periodisch ausgesendet und wird benutzt, um die mit dem Koordinator assoziierten Geräte zu synchronisieren, das Sternnetz zu identifizieren, und die Struktur des Superframes zu beschreiben. Fig. 3 zeigt die Struktur des Beacons.

Die einzelnen Felder des in Fig. 3 dargestellten Beacons haben die folgenden Bedeutungen (nur für die Erfindung relevante sind aufgeführt):
- Sequence Number: ist die Beacon-Sequenznummer, die mit jedem ausgesendeten Beacon um 1 erhöht wird.
- Addressing Fields: enthalten die
   ▪ PAN-ID der Quelle (2 Byte). Die PAN-ID identifiziert das Personal Area Network. Das kann ein einzelnes Sternnetz sein, oder auch ein Netz, das aus mehreren Sternnetzen besteht.
   ▪ Quelladresse (2 oder 8 Byte entsprechend des verwendeten Adressformates).
- Frame Control: besteht selber aus mehreren Unterfeldern, welche in Fig. 4 dargestellt sind. Die einzelnen Unterfelder haben die folgenden Bedeutungen:
   ▪ Frame Type: gibt den Typ des Paketes an, also ob es ein Beacon ist.
   ▪ PAN-ID Compression: vermeidet, wenn gesetzt, das Source PAN-ID Feld, wenn Quelle und Ziel im selben PAN liegen. Quell- und Ziel-Adresse müssen im Paket enthalten sein.
   ▪ Destination Addressing Mode: spezifiziert welches Adressformat für die Zieladresse verwendet wird. Wird beim Beacon nicht benötigt
   ▪ Frame Version: hilft bei der Erkennung von Frames, die nicht mit der vorherigen Version IEEE 802.15.4-2003 des Standards kompatibel sind. Mechanismus für Rückwärtskompatibilität.
   ▪ Source Addressing Mode: spezifiziert welches Adressformat für die Quelladresse verwendet wird. Im Beacon kann das entweder das kurze Adressformat (2 Byte) oder das vollständige Adressformat (8 Byte) sein.

Neue Geräte können sich in der Contention Access Period, in der der Zugriff über CSMA geregelt ist, anmelden und entsprechende GTS beantragen. Die Länge der Contention Access Period ergibt sich aus der im Beacon übermittelten Superframe Specification.

In dem eingangs erwähnten Dokument [1] ist ein Sternnetz mit Zeitschlitzverfahren definiert, mit dem eine sehr geringe Verzögerung möglich ist. Wesentliche Eigenschaft ist ein sehr kurzer MAC-Header (1 Byte). Der Superframe wird in expliziten Konfigurations-Modi konfiguriert, während des normalen Betriebs ist diese Information nur implizit in den Knoten vorhanden. Der zentrale Knoten wird Gateway genannt, die sternförmig angeschlossenen Geräte werden als Sensoren oder Aktoren bezeichnet.

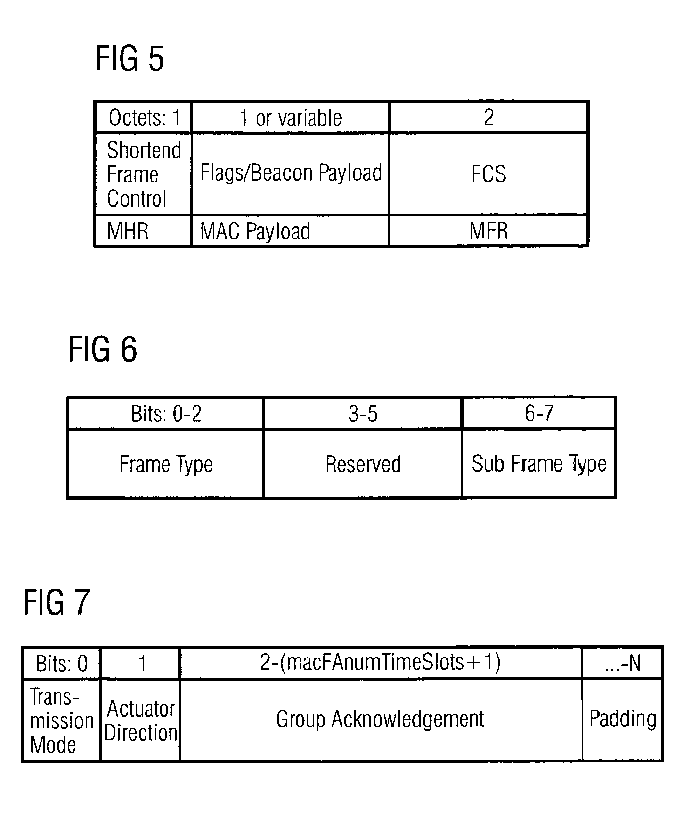

Das Beacon enthält nur sehr wenige Informationen und dient eigentlich nur dazu, den Modus anzuzeigen und die Sensoren mit dem Superframe zu synchronisieren. Fig. 5 zeigt die Struktur des Beacons.

Die einzelnen Felder des Beacons haben die folgenden Bedeutungen:
- Shortened Frame Control: ist der auf 1 Byte verkürzte MAC-Header und enthält die folgenden Felder (siehe Fig. 6) :
   ▪ Frame Type: spezifiziert eine Klasse spezieller Pakettypen, die den kurzen MAC-Header verwenden
   ▪ Sub Frame Type: spezifiziert innerhalb der Klasse der Pakete mit kurzem MAC-Header den Pakettyp, zum Beispiel den Pakettyp Beacon.
- Flags/Beacon Payload: enthält die Steuerinformation des Beacons, unter anderem auch den Modus. Da die Erfindung für den Online-Modus (normaler Betrieb) gedacht ist, wird hier nur die dafür vorgesehene Beacon-Payload betrachtet. Diese ist in Fig. 7 dargestellt und enthält die folgenden Felder:
   ▪ Transmission Mode: gibt den Übertragungsmodus an (Konfigurations-Modi oder normaler Betrieb)
   ▪ Actuator Direction: gibt die Senderichtung für Aktoren an (Downlink/Uplink)
   ▪ Group Acknowledgement: ist ein Bitfeld, das Acknowledgements für die einzelnen (Uplink-) Zeitschlitze enthält.
- FCS: ist die Frame Control Sequence und dient der Überprüfung der fehlerfreien Übertragung eines Paketes.

Neue Geräte können sich im normalen Betrieb eigentlich nicht anmelden oder Steuerpakete an den Gateway schicken. Während der Konfigurations-Modi kann festgelegt werden, dass sogenannte Management-Zeitschlitze, in denen CSMA-Zugriff gilt, zu Beginn des Superframes vorhanden sind. Da diese Konfiguration den neuen Geräten aber nicht bekannt ist, können sie diese Management-Zeitschlitze nicht nutzen. Das Gleiche gilt für sogenannte Shared-Group-Zeitschlitze, in denen ebenfalls ein CSMA-Zugriff möglich ist, die Konfiguration der Shared-Group-Zeitschlitze den neuen Geräten aber nicht bekannt ist.

Die Erfindung erweitert das aus Dokument [1] bekannte Beacon, so dass bei Empfang des Beacons:
- Konfigurationen des Sternnetzes unterschieden werden können
- Gateways unterschieden werden können
- Neue Sensoren oder Human-Maschine-Interface(HMI)-Geräte die Möglichkeit haben, Steuerpakete an den Gateway zu schicken

Die Erfindung beinhaltet die Erweiterung des Beacons mit:
- Konfiguration der Management-Zeitschlitze:
   ▪ Länge eines Basis-Zeitschlitzes
   ▪ Anzahl der verwendeten Basis-Zeitschlitze pro Management-Zeitschlitz
- Gateway-ID
- Konfigurationssequenznummer (KSN) für die aktuelle Konfiguration

### Konfiguration der Management-Zeitschlitze

Management-Zeitschlitze werden in einem Superframe verwendet, um Konfigurationen für das System zu übertragen. Die Management-Zeitschlitze werden immer paarweise geplant - es steht für jede Übertragungsrichtung (Up-/Down-Link) ein Management-Zeitschlitz zur Verfügung. Die Management-Zeitschlitze werden direkt nach dem Beacon angeordnet. Der Zugriff auf die Management-Zeitschlitze erfolgt immer im CSMA-Verfahren. Je nach Anwendung kann die Größe einer Konfigurationsnachricht die Größe eines Basis-Zeitschlitzes übertreffen. Deshalb ist es gegebenenfalls erforderlich, dass die Management-Zeitschlitze länger als ein Basis-Zeitschlitz sind. Ein derartiger Management-Zeitschlitz wird erfindungsgemäß durch die beiden Parameter "Länge eines Basis-Zeitschlitzes (Timeslot Size)" und "Anzahl der Basis-Zeitschlitze pro Management-Zeitschlitz (Number of Base Timeslots per Management Timeslot)" festgelegt.

### Gateway-ID

Die Gateway-ID ist ein Identifikator für den Gateway eines Sternnetzes. Er kann aus der MAC-Adresse des Gateways hergeleitet sein, muss es aber nicht. Es kann zum Beispiel eine Zufallszahl sein, oder durch ein Netz-Management-System vorgegeben werden.

Die Gateway-ID wird auch als ein Attribut einer Sternnetzkonfiguration in den entsprechenden Sensorknoten abgespeichert. Bewegt sich ein Sensorknoten zwischen mehreren Gateways, so kann er anhand der im Beacon übermittelten Gateway-ID die entsprechende Konfiguration auswählen.

Ohne die Gateway-ID müsste beim Roaming der exakte Pfad, also die exakte Reihenfolge der durchlaufenen Sternnetze, angegeben werden, damit entsprechende Konfigurationen nachgeladen werden können. Falls der Sensorknoten sich auf Abwegen bewegt und in ein Sternnetz kommt, das noch nicht an der Reihe ist, besteht die Gefahr von Datenkollisionen und ernsthaften Störungen der Datenkommunikation. Mit der Gateway-ID kann der Sensorknoten die richtige Konfiguration für den gerade aktuellen Gateway auswählen und kann sich dadurch auch viel flexibler beim Roaming bewegen.

### Konfigurationssequenznummer (KSN) für aktuelle Konfiguration

Die obigen Ausführungen zum Gateway-ID gehen noch davon aus, dass sich die aktuelle Konfiguration in einem bestimmten Sternnetz nicht ändert. Mit der Konfigurationssequenznummer kann auch die Änderung der Konfiguration eines Sternnetzes von den Sensorknoten erkannt werden.

Die Konfigurationssequenznummer ist in erster Linie ein Identifikator für eine bestimmte Konfiguration des Sternnetzes. Stimmt die KSN aus dem Beacon nicht mit der als Attribut der Sternnetzkonfiguration im Sensorknoten abgespeicherten KSN überein, kann davon ausgegangen werden, dass der Sensorknoten nicht die aktuelle Konfiguration kennt. Um Datenkollisionen und eine ernsthafte Störung der Datenkommunikation im Sternnetz zu vermeiden, darf der Sensorknoten dann nicht entsprechend seiner Konfiguration senden, sondern muss bis zum nächsten Konfigurationszyklus warten oder sich die aktuelle Konfiguration vom Gateway besorgen.

Durch die Gestaltung der KSN als Sequenznummer kann der Wertebereich für unterschiedliche Konfigurationen maximal ausgenutzt werden. Jeder neue Konfigurationszyklus des Sternnetzes erhöht die KSN auf dem Gateway um 1. Dadurch können auch gewisse chronologische Zusammenhänge der Konfigurationen bei Bedarf abgeleitet werden.

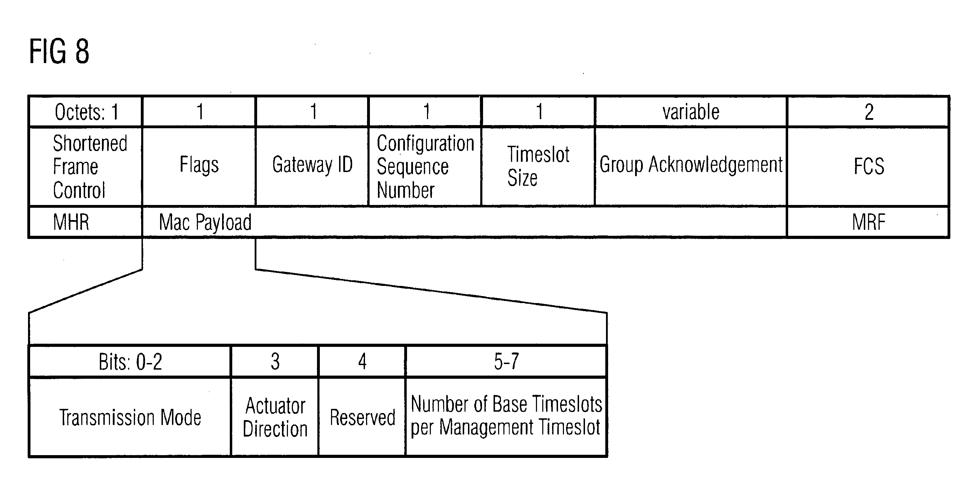

Diese neuen Informationen können sehr variabel in Größe und Reihenfolge in dem Beacon platziert werden, ohne dass die Funktionalität verändert wird. Eine favorisierte Struktur des erfindungsgemäßen Beacons ist in Fig. 8 angegeben. Andere Strukturen sind ebenfalls möglich.

Die einzelnen Felder des in Fig. 8 dargestellten erfindungsgemäßen Beacons haben die folgenden Bedeutungen:
- Shortened Frame Control: Das verkürzte Frame-Control-Feld entspricht dem aus Dokument [1] bzw. einem äquivalenten Frame-Control-Feld.
- Flags: Das Flags-Feld enthält verschiedene Steuer-Bits:
   ▪ Transmission mode: unterscheidet die Übertragungsmodi, insbesondere zwischen Discovery Mode, Konfigurationsmode und normalem Betrieb.
   ▪ Actuator Direction: Dieses Feld ist nur im normalen Betrieb von Bedeutung und gibt die Kommunikationsrichtung der Aktoren an (Downlink/Uplink) und ist bereits im Dokument [1] enthalten.
   ▪ Number of Base Timeslots per Management Timeslot: Gibt die Anzahl der Basiszeitschlitze für einen Management-Zeitschlitz an. Der Wertebereich geht von 0 (keine Management-Zeitschlitze vorhanden) bis 7 (maximale Länge der Management-Zeitschlitze). Downlink- und Uplink-Management-Zeitschlitze sind dabei gleich lang.
- Gateway-ID: ist der frei wählbare Identifikator des Gateways. Mit einer Gateway-ID von 1 Oktet können bis zu 256 verschiedene Gateways und damit Sternnetze unterschieden werden.
- Configuration Sequence Number: Die Konfigurationssequenznummer (KSN) von 1 Oktet erlaubt 256 eindeutig unterscheidbare Konfigurationen. Da eine Konfigurationsänderung eher selten stattfindet, reicht diese Anzahl aus.
- Timeslot Size: die Größe eines Basiszeitschlitzes tss in Vielfachen von Oktets. Andere Einheiten sind denkbar. Außerdem ist auch der Offset wichtig. Je höher der Offset, desto länger können die Basiszeitschlitze sein. Die Berechnung der Zeitdauer verändert sich aber.
   ▪ Die allgemeine Berechnungsvorschrift für die Dauer eines Basiszeitschlitzes ist nach Dokument [2] für die 2.4 GHz-Bitübertragungsschicht (PHY):
      ▪ t_{TS} : = ((p+(m+n)) · 2 Symbol/Oktet + 12 bzw. 40 Symbol {m+n ≤ 18 Oktet bzw. m+n > 18 Oktet})/v_{Symbol}, wobei p die Anzahl Oktets des PHY-Headers ist (6 Oktets), m die Anzahl Oktets des MAC-Overheads ist (3 Oktets), n die Anzahl Oktets der Nutzdaten und v_{Symbol} die Symbolgeschwindigkeit von 62500 Symbol/s ist.
      ▪ Ist der Offset o = 0, so steht hier in tss die konkrete Zahl der Bytes des Zeitschlitzes.
      ▪ t_{TS}: = (tss · 2 + 12 bzw. 40 {tss-6 ≤ 18 bzw. tss-6 > 18})/62500, max: = 8,800 ms
      ▪ Ist der Offset o = 6, so steht hier in tss die Zahl der Bytes des MAC-Paketes, also ohne die Bytes des PHY-Headers
      ▪ t_{TS}: = ((tss + 6) · 2 + 12 bzw. 40 {tss ≤ 18 bzw. tss > 18})/62500, max: = 8,992 ms
      ▪ Ist der Offset o = 9, so steht hier in tss die Zahl der Bytes der Nutzdaten, also ohne die Bytes des Paket-Headers
      ▪ t_{TS}: = ((tss + 9) · 2 + 12 bzw. 40 {tss + 3 ≤ 18 bzw. tss +3 > 18})/62500, max: = 9,088 ms
      Die Variante mit einem Offset, der dem gesamten Overhead eines Paketes entspricht (hier 9), ergibt die größte Anzahl möglicher Basiszeitschlitzgrößen, und auch die längste. Um die Entscheidung über die Länge des Interframe-Spacings (12 oder 40 Symbole) effektiver treffen zu können, sollte der Vergleich etwas anders ausgeführt werden:
      tss ≤ (18-3), also tss ≤ 15.
      Die bevorzugte Variante stellt eine Berechnung über die Länge des MAC-Paketes dar (mittlere Variante), da diese Berechnung auch für unterschiedliche Varianten der PHY-Schicht angewendet werden kann und die Berechnung des zu verwendenden Interframe-Spacings vereinfacht.
- Group Acknowledgements: wird nur im normalen Betriebsmodus verwendet, um eine Rückmeldung über den Empfang von Daten der Sensorknoten zu geben.
- FCS: ist die Frame Control Sequence und dient der Erkennung von Bitübertragungsfehlern.

### Erweiterungen im Sensorknoten

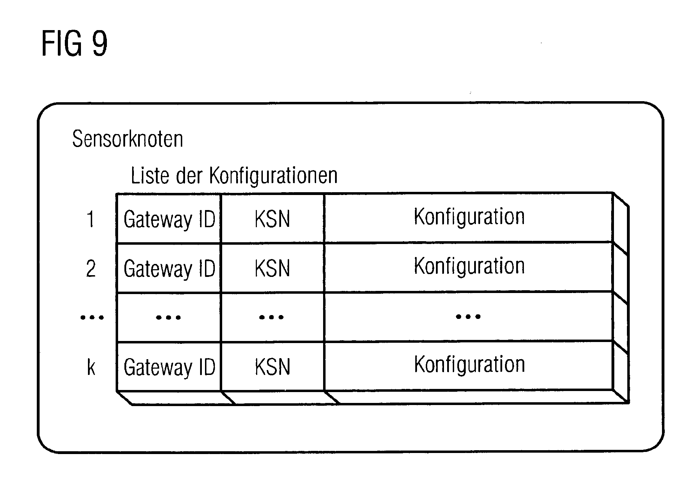

Die Datenstruktur im Sensorknoten für die Speicherung der Konfiguration muss um zwei Attribute erweitert werden: Gateway-ID und Konfigurationssequenznummer (KSN). Außerdem ist es vorteilhaft, wenn die Datenstruktur als Liste oder Feld organisiert ist, die k ≥ 1 Konfigurationen abspeichern kann (siehe Fig. 9). Ohne die Möglichkeit, die Konfiguration mehrerer Gateways gleichzeitig im Sensorknoten abzuspeichern, kann kein flexibles Roaming unterstützt werden.

### Regeln für die Verwendung der Erfindung

Bei der Initialisierung des Gateways müssen auch ein Wert für die Gateway-ID und der Startwert der Konfigurationssequenznummer (KSN) bestimmt werden.
- Für die Gateway-ID kann zum Beispiel ein zufälliger Wert verwendet werden oder auch das letzte Oktet der MAC-Adresse. Diese Verfahren eignen sich insbesondere, wenn nur ein Sternnetz verwendet wird. Sollen mehrere Sternnetze verwendet werden, so dass ein Roaming der Sensorknoten zwischen verschiedenen Gateways möglich ist, gibt es eine geringe Wahrscheinlichkeit, dass mit diesen Verfahren dieselben Gateway-IDs für verschiedene Gateways zugewiesen werden. In diesem Fall empfiehlt es sich, die Gateway-IDs manuell oder durch ein Network Management System, mit dem eindeutige Gateway-IDs festgelegt werden können, zu setzen. Es ist auch denkbar, einen verteilten Algorithmus zur Erkennung von Duplikaten bei der Gateway-ID bzw. zur duplikatfreien Zuweisung von Gateway-IDs einzusetzen, der über den Backbone, der alle Gateways miteinander verbindet, entsprechende Daten austauscht.
- Für die KSN wird in der Regel ein zufälliger Startwert verwendet. Erreicht die KSN den größten Wert, hier 255, so ist der nächste Wert 0 (Sequence Number Rollover). Es sind entsprechende Mechanismen bekannt, die die entsprechende Relation 255 < 0 erkennen.

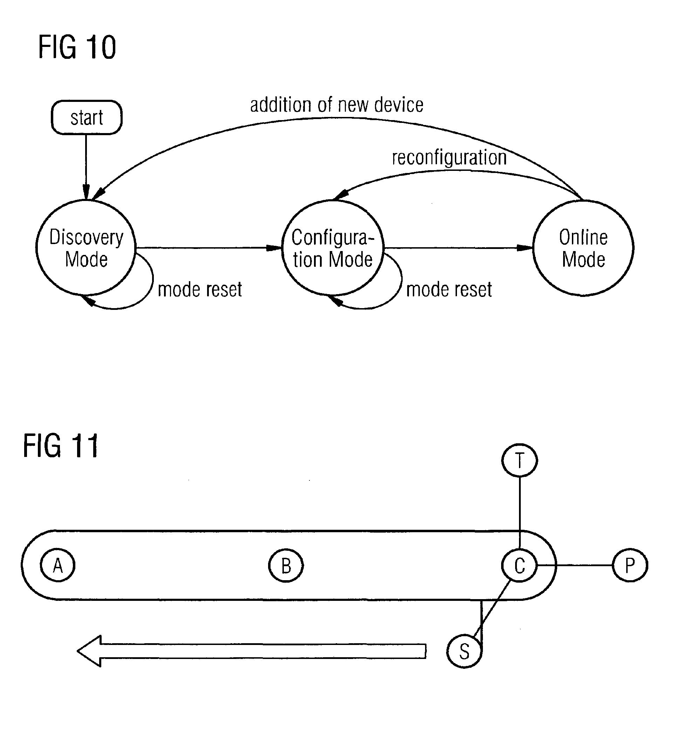

In einem Sternnetz nach Dokument [1] gibt es drei Übertragungsmodi, die für verschiedene Stufen der Konfiguration und des Betriebes stehen (siehe Fig. 10), und die durch das Gateway festgelegt und im Beacon mitgeteilt werden.

Der Discovery-Mode dient zum "Entdecken" aller Sensorknoten in Reichweite des Gateways. Der Superframe besteht nur aus Beacon und den beiden Management-Zeitschlitzen (Downlink/Uplink). Deshalb ist es wichtig, dass die erfindungsgemäße Erweiterung des Beacons für die Konfiguration der Management-Zeitschlitze im Beacon enthalten ist, damit sich die (neuen) Sensorknoten korrekt um den Zugriff zum Übertragungsmedium bewerben können. Die Konfigurationssequenznummer braucht im Discovery-Mode nicht mit im Beacon enthalten sein bzw. braucht nicht ausgewertet zu werden.

Im Konfigurationsmodus übermittelt der Gateway allen im Discovery-Mode entdeckten Sensorknoten die für sie gültige Konfiguration. Der Superframe besteht nur aus Beacon und den beiden Management-Zeitschlitzen (Downlink/Uplink). Deshalb ist es wichtig, dass die erfindungsgemäße Erweiterung des Beacons für die Konfiguration der Management-Zeitschlitze im Beacon enthalten ist, damit sich die entdeckten Sensorknoten korrekt um den Zugriff zum Übertragungsmedium bewerben können. Die Konfigurationssequenznummer muss in diesem Modus im Beacon enthalten sein. Sie identifiziert die Konfiguration des Sternnetzes, die gerade den Sensorknoten mitgeteilt wird. Für jede neue Konfiguration muss die Konfigurationssequenznummer um 1 erhöht werden. Eine neue Konfiguration liegt zwar oft, aber nicht notwendigerweise bei einem Wechsel in den Konfigurationsmodus vor. Da eine Veränderung der KSN bedeutet, dass alle Sensorknoten eine neue Konfiguration bekommen müssen, bevor sie wieder an der Kommunikation im Sternnetz teilnehmen können, sollte nur bei einer quantitativ unterschiedlichen Konfiguration, die zu Konflikten mit der existierenden Konfiguration führt, die KSN erhöht werden. Wenn ein vorhandener Zeitschlitz, der aber nach der alten Konfiguration garantiert nicht von einem Sensorknoten benutzt wird, in der neuen Konfiguration einem Sensorknoten zugeordnet wird, braucht die KSN nicht erhöht werden, da es nicht zu Konflikten bei den Datenübertragungen kommen kann.

Im normalen Betrieb (Online Mode) kommt ein Beacon, wie in Fig. 8 dargestellt, zum Einsatz. Die Konfiguration kann eindeutig durch das Zweier-Tupel {Gateway-ID, KSN} identifiziert werden. Stimmen Gateway-ID oder KSN nicht mit den aktuell im Sensorknoten gespeicherten Werten überein, darf der Sensorknoten keine Daten entsprechend seiner Konfiguration senden. Er muss warten bis
- Gateway-ID und KSN aus dem Beacon mit seinen aktuell gespeicherten Werten übereinstimmen, oder
- der Gateway in den Konfigurationsmodus wechselt und ihm eine neue Konfiguration mitteilt, oder
- falls Management-Zeitschlitze im Superframe vorhanden sind, der Sensorknoten für sich sozusagen "persönlich" die aktuelle Konfiguration beim Gateway erfragt.

Bei Erhalt eines Beacons wird der folgende Algorithmus ausgeführt. Dabei bedeuten "B_<feld>" das entsprechende Feld aus dem Beacon, und "SK_<feld>_i" das entsprechende Attribut aus dem Sensorknoten mit dem Index i.

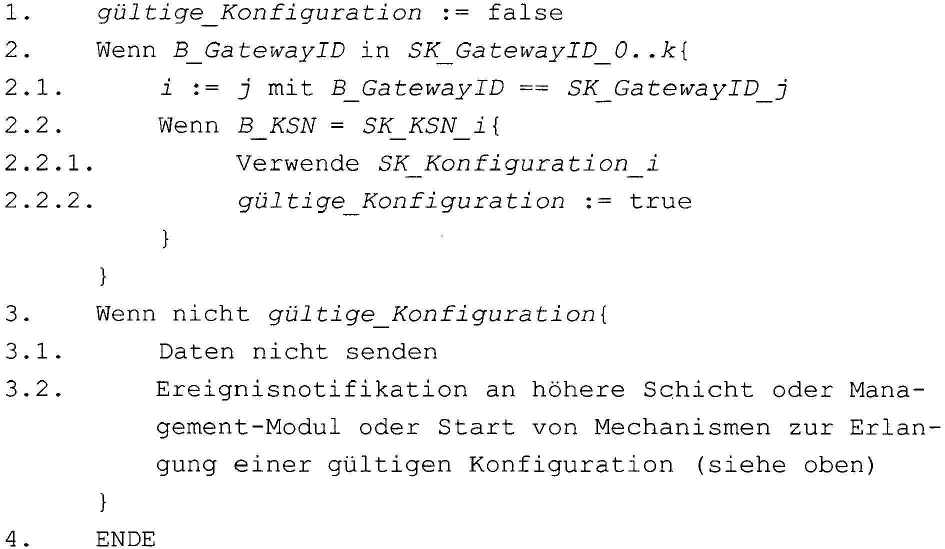

Um die Bearbeitungszeit eines Beacons zu verkürzen, können Gateway-ID und KSN aus dem Beacon zuerst mit den entsprechenden Attributen der zuletzt verwendeten Konfiguration verglichen werden (zweiter Algorithmus). Dadurch muss nicht immer die gesamte Liste durchsucht werden. Implementiert werden kann dies zum Beispiel durch einen Zeiger auf den entsprechenden Eintrag in der Liste der Konfigurationen oder durch eine spezielle Datenstruktur, welche die zuletzt verwendete Konfiguration enthält und bei Bedarf diese hineinkopiert wird. Der obige Algorithmus ändert sich dann wie folgt:

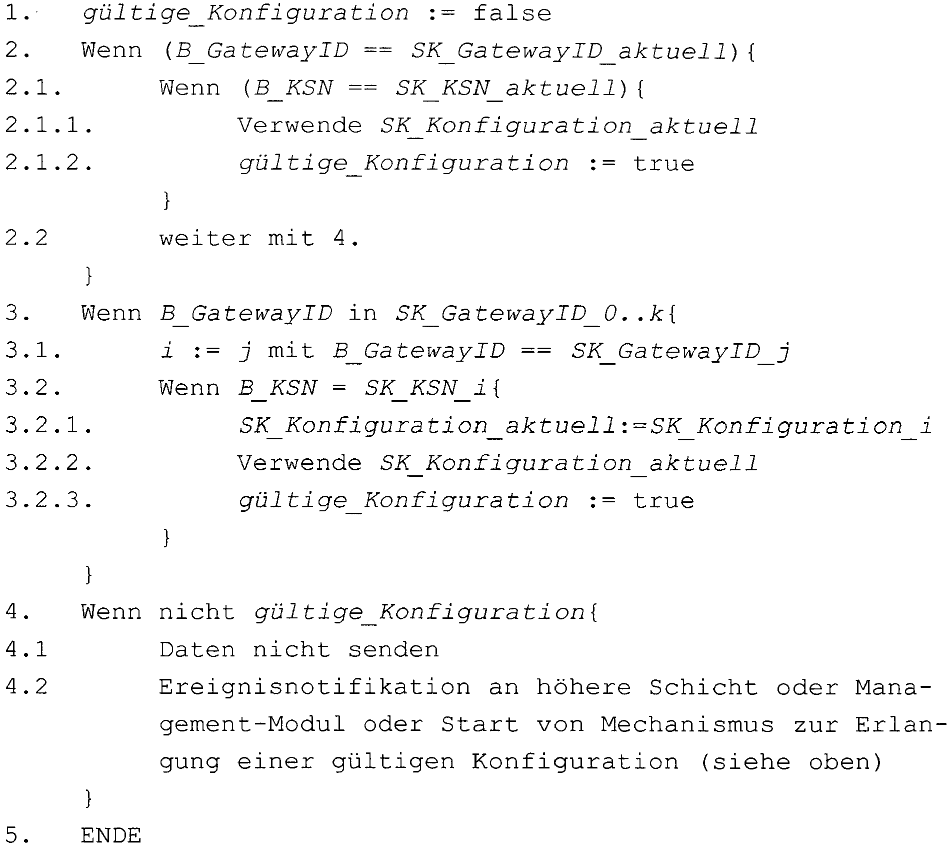

Die Erfindung umfasst hauptsächlich:
- ein erweitertes Beacon-Format
- eine erweiterte Datenstruktur für die Speicherung der aktuellen Konfiguration im Sensorknoten
- Vorschriften, wie die neuen Informationen im Beacon-Frame zu verwenden sind

### Erweitertes Beacon-Format

Die Übermittlung der Konfiguration der Management-Zeitschlitze (Länge der beiden Management-Zeitschlitze), die bestimmt wird aus den beiden übermittelten Informationen
- Länge eines Basis-Zeitschlitzes,
- Anzahl der verwendeten Basis-Zeitschlitze pro Management-Zeitschlitz
stellt damit den Sensorknoten einen Bereich zur Verfügung, für den sie nach Erhalt des Beacons die Konfigurationsparameter kennen und deshalb dort geordnet Steuerinformationen senden können. Das ist insbesondere wichtig für neue Sensorknoten, die noch nicht konfiguriert wurden, für den Betrieb im Discovery- und im Konfigurationsmodus, und für Sensorknoten, die nicht mehr die aktuelle Konfiguration haben und gezielt die aktuelle Konfiguration für sich vom Gateway erfragen wollen. Die Management-Zeitschlitze mit im Beacon übermittelter Konfiguration unterstützen auch den Einsatz von HMI-Geräten (HMI - Human Machine Interface, Mensch-Maschine-Schnittstelle) wie zum Beispiel tragbaren Panels, PDAs oder Notebooks, die nur gelegentlich für Kontroll- und Überwachungsaufgaben in das Sternnetz eingebunden werden müssen.

Die Übermittlung der Gateway-ID erlaubt die eindeutige Zuordnung eines Beacons zu einem Gateway und damit Sternnetz. Dadurch ist es möglich, verschiedene Sternnetze zu unterscheiden. Dies ermöglicht ein effizientes und flexibles Roaming von Sensorknoten.

Die Übermittlung der Konfigurationssequenznummer (KSN) für die aktuelle Konfiguration ermöglicht es, zusammen mit der Gateway-ID, Änderungen in der Konfiguration eines Sternnetzes selbst dann zu erkennen, wenn der Sensorknoten nicht alle Beacons mitbekommen hat, also eventuell einen Konfigurationszyklus verpasst hat. Diese Fähigkeit des Erkennens einer veränderten Konfiguration unterstützt das Roaming, da sich ein Sensorknoten ja normalerweise eine längere Zeit bei anderen Gateways befindet. Sie ermöglicht auch das Energiesparen durch Abschalten der Funkschnittstelle für eine längere Zeit. Wenn ein Sensorknoten keine Daten zu senden hat, kann er sich "schlafen legen". Er kann zwar zu den Beacons jeweils aufwachen und dann diese empfangen und danach sich wieder bis zum nächsten Beacon schlafen legen. Durch die KSN braucht er aber auch diese nicht mehr zu empfangen. Durch den Vergleich von Gateway-ID und KSN kann er feststellen, ob er noch bei dem richtigen Gateway ist und ob er noch die aktuelle Konfiguration hat. Dadurch kann er feststellen, ob er ohne Probleme Daten senden kann.

Trotz der neuen, zusätzlichen Informationen ist das Beacon in der exemplarischen, favorisierten Ausführung aus Fig. 8 ausreichend kompakt. Es unterstützt 88 Sensorknoten im Sternnetz, ohne das lange Interframe-Spacing von 40 Symbolen zu benötigen. Diese Anzahl von Sensorknoten ist für die meisten anvisierten Anwendungen ausreichend. 88 Sensorknoten bedeuten 11 Oktets im Group Acknowledgement, damit wären 18 Oktets im MAC-Paket, der maximale Wert für das kurze Interframe-Spacing.

### Erweiterte Datenstruktur auf dem Sensorknoten

Die erweiterte Datenstruktur auf dem Sensorknoten erlaubt die Speicherung von Konfigurationen für mehrere Gateways, eine wichtige Voraussetzung für das Roaming, sowie der neu eingeführten Attribute einer Konfiguration (Gateway-ID und KSN).

### Vorschriften

Die Vorschriften für die Verwendung der neuen Informationen aus dem Beacon ermöglichen die effiziente Unterstützung von Roaming und Energiesparen.

Weitere Merkmale und Vorteile der Erfindung ergeben sich aus einem Ausführungsbeispiel, welches im Folgenden anhand der Zeichnungen erläutert wird. Es zeigen:
- Fig. 1: ein in Dokument [3] definiertes Beacon-Frameformat,
- Fig. 2: eine in Abschnitt 5.5.1 des Dokumentes [2] definierte Superframe-Struktur mit GTSs,
- Fig. 3: ein in Abschnitt 7.2.2.1 des Dokumentes [2] definiertes Beacon-Frameformat,
- Fig. 4: ein in Abschnitt 7.2.1.1 des Dokumentes [2] definiertes Format des Frame Control Field,
- Fig. 5: ein in Abschnitt 4.2 des Dokumentes [1] definiertes Format des Shortened-Beacon-Frame,
- Fig. 6: ein in Abschnitt 4.1.1 des Dokumentes [1] definiertes Format des Shortened-Frame-Control-Field,
- Fig. 7: eine in Abschnitt 4.2.1 des Dokumentes [1] definierte Beacon-Payload im Online-Modus,
- Fig. 8: eine Ausführungsform einer Paketstruktur eines erfindungsgemäßen Beacons,
- Fig. 9: einen erfindungsgemäßen Sensorknoten mit einer Liste von Konfigurationen,
- Fig. 10: eine schematische Darstellung der in Dokument [1] definierten Übertragungsmodi,
- Fig. 11: eine schematische Darstellung eines beispielhaften drahtlosen Kommunikationsnetzes für eine Fertigungsautomatisierung,
- Fig. 12: eine tabellarische Darstellung von Superframe-Konfigurationen auf einem Netzknoten des Kommunikationsnetzes gemäß Fig. 11 zu verschiedenen Zeitpunkten, und
- Fig. 13: ein Beacon eines Netzknotens eines Kommunikationsnetzes gemäß Fig. 11 zu einem bestimmten Zeitpunkt.

Für das Ausführungsbeispiel betrachten wird das in Fig. 11 dargestellte, vereinfachte, drahtlose Kommunikationsnetz für die Fertigungsautomatisierung. Knoten A, B und C sind drei Gateways. Knoten S, T und P sind Sensorknoten. Der Sensorknoten S bewegt sich dabei an einem Förderband um die drei Gateways A, B und C. Ein Sensorknoten kann gleichzeitig höchstens im Funkbereich zweier benachbarter Gateways sein. Die Funkbereiche der Gateways werden in der wiederkehrenden Reihenfolge C-B-A-B durchlaufen. Sensorknoten T und P sind stationär und können über Funk mit dem Gateway C kommunizieren. Sensorknoten P ist batteriebetrieben und schaltet sich für längere Zeit ab, um Energie zu sparen. Die Funkverbindungen sind durch dünne, gepunktete Linien angegeben.

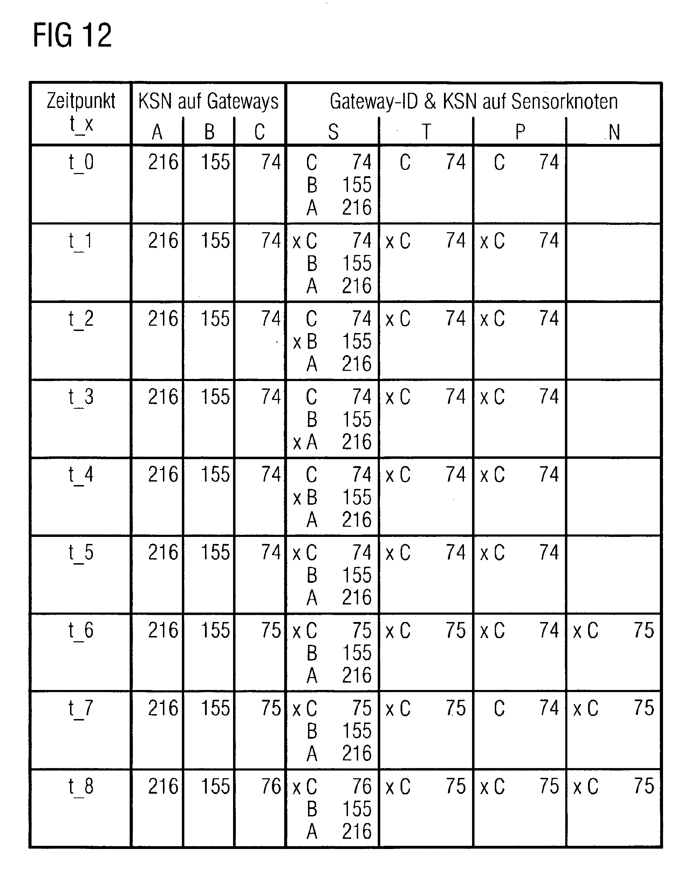

In Fig. 12 sind in tabellarischer Form die entsprechenden Superframe-Konfigurationen der Gateways und Sensorknoten zu den verschiedenen, im Ausführungsbeispiel verwendeten Zeitpunkten angegeben. Es ist nicht die eigentliche Superframe-Konfiguration aufgeführt, sondern nur die entsprechend der Erfindung neuen Attribute: die Gateway-ID und die Konfigurationssequenznummer (KSN). Für das Ausführungsbeispiel wird der Einfachheit halber der Name des Gateways für die Gateway-ID verwendet (A, B oder C). Die zu dem bestimmten Zeitpunkt verwendete Konfiguration (aktuelle Konfiguration) ist durch ein x vor der entsprechenden Gateway-ID gekennzeichnet.

Während der Konfiguration zum Zeitpunkt t₀, die hier nicht weiter ausgeführt wird, bekommen die Sensorknoten die entsprechenden Superframe-Konfigurationen mitgeteilt. Eine Festlegung der aktuellen Konfiguration ist zu diesem Zeitpunkt t₀ noch nicht notwendig, da es erst während des Betriebes notwendig ist, die aktuell verwendete Konfiguration zu wissen.

Das Fertigungsautomatisierungsnetz geht nun in Betrieb, und die Sensorknoten befinden sich zum Zeitpunkt t₁ an den Positionen wie in Fig. 11 dargestellt. Sensorknoten S, T und P, sofern P nicht im Schlafmodus ist, empfangen nun die Beacons des Gateways C mit Gateway-ID ("C") und KSN ("74"). Entsprechend des zweiten Algorithmus vergleichen die Sensorknoten diese beiden Werte im zweiten Schritt des Algorithmus mit den entsprechenden Werten ihrer aktuellen Konfiguration. Alle Sensorknoten stellen Übereinstimmung fest (C = C in Schritt 2 und 74 = 74 in Schritt 2.1) und verwenden ihre bisherige aktuelle Konfiguration (Schritt 2.1.1).

Sensorknoten S bewegt sich nun am Förderband durch die Funkbereiche der Gateways A, B und C. Zum Zeitpunkt t₂ wechselt Sensorknoten S vom Gateway C zum Gateway B. Sensorknoten S erhält nun das erste Beacon von Gateway B. Entsprechend des zweiten Algorithmus vergleicht S die im Beacon enthaltene Gateway-ID ("B") mit seiner aktuellen Konfiguration (Schritt 2). Es gibt keine Übereinstimmung, da die Gateway-IDs nicht dieselben sind (B ≠ C). Deshalb wird mit Schritt 3 fortgefahren, indem durch die Liste der Konfigurationen gegangen und nachgesehen wird, ob eine entsprechende Konfiguration für die Werte aus dem Beacon vorliegt. Das ist hier der Fall (B = B und 155 = 155). Sensorknoten S verwendet nun diese Konfiguration.

Zum Zeitpunkt t₃ wechselt Sensorknoten S vom Gateway B zum Gateway A. Sensorknoten S erhält nun das erste Beacon von Gateway A. Entsprechend des zweiten Algorithmus vergleicht S die im Beacon enthaltene Gateway-ID ("A") mit seiner aktuellen Konfiguration (Schritt 2). Es gibt keine Übereinstimmung, da die Gateway-IDs nicht dieselben sind (A ≠ B). Deshalb wird mit Schritt 3 fortgefahren, in dem durch die Liste der Konfigurationen gegangen und nachgesehen wird, ob eine entsprechende Konfiguration für die Werte aus dem Beacon vorliegt. Das ist hier der Fall (A = A und 216 = 216). Sensorknoten S verwendet nun diese Konfiguration.

Sensorknoten S wechselt zum Zeitpunkt t₄ vom Gateway A zum Gateway B, und zum Zeitpunkt t₅ vom Gateway B zum Gateway C. In beiden Zeitpunkten laufen die gleichen algorithmischen Schritte ab, wie bereits für die Zeitpunkte t₂ und t₃ beschrieben. Die Runde des Sensorknotens S ist nun voll, und es geht mit einem erneuten Wechsel von Gateway C zu Gateway B wie im Zeitpunkt t₂ weiter.

Nach einer gewissen zeit dieses normalen Betriebes schaltet Sensorknoten P sein Funkmodul für einen längeren Zeitraum ab, um Strom zu sparen. Während Sensorknoten P schläft, kommt zum Zeitpunkt t₆ ein neuer Sensorknoten N in das Netz hinzu. Er ist im Funkbereich von Gateway C, das nun eine neue Konfiguration mit KSN = 75, die den neuen Sensorknoten N beinhaltet, den Sensorknoten in seinem Bereich mitteilt (einschließlich Sensorknoten S). Sensorknoten P "verschläft" diese neue Konfiguration.

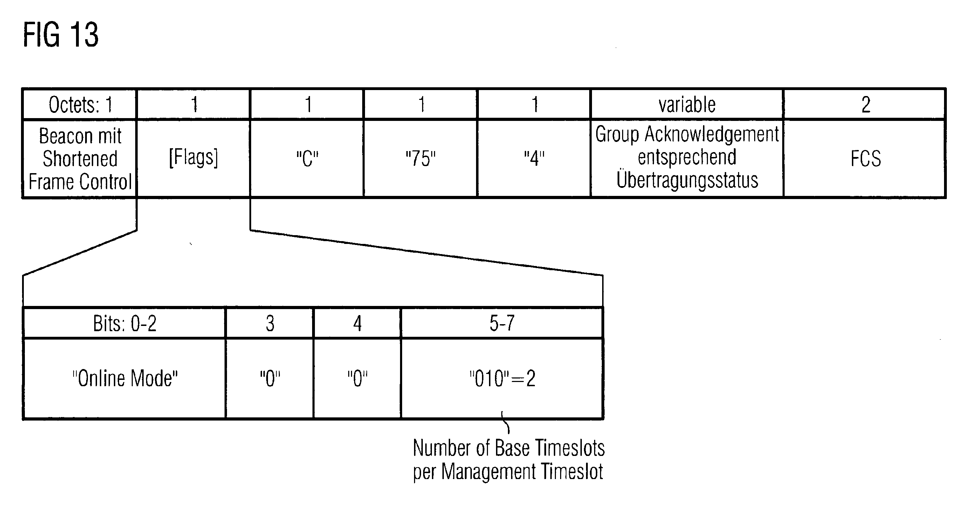

Zum Zeitpunkt t₇ schaltet Sensorknoten P sein Funkmodul wieder an und empfängt das erste Beacon von Gateway C (siehe Fig. 13). Entsprechend des zweiten Algorithmus vergleicht S die im Beacon enthaltene Gateway-ID ("C") und KSN ("75") mit seiner aktuellen Konfiguration (Schritte 2 und 2.1). Es stimmt zwar die Gateway-ID überein (C = C), aber die Konfigurationssequenznummern sind unterschiedlich (74 ≠ 75). Deshalb muss mit Schritt 2.2 bzw. Schritt 4 fortgefahren werden, Sensorknoten P kann seine Daten in diesem Superframe nicht senden. Wie aus Fig. 13 zu erkennen, sind im Superframe Management-Zeitschlitze enthalten, da das Feld "Number of Base Timeslots per Management Timeslot" größer als Null ist, in diesem Fall enthält es den Wert binär 010 (= 2). Sensorknoten P nutzt in diesem Ausführungsbeispiel diese Management-Zeitschlitze, um Gateway C über seine fehlende Konfiguration zu informieren. Gateway C teilt Sensorknoten P die neue Konfiguration mit der KSN = 75 mit. Das ist im Zeitpunkt t₈ dargestellt. Somit kann Knoten P wieder an der Kommunikation teilhaben.

## Patentansprüche

1. Beacon für ein Sternnetz mit einem Gateway (A; B; C) und mindestens einem Sensorknoten (P; S; T), wobei das Beacon Felder aufweist, welche beinhalten
- eine Information über eine Länge eines Basiszeitschlitzes,
- eine Information über die Anzahl der verwendeten Basiszeitschlitze pro Management-Zeitschlitz,
- eine Gateway-ID als Identifikator für den Gateway (A; B; C) eines Sternnetzes und
- eine Konfigurationssequenznummer (KSN) als Identifikator für eine aktuelle Konfiguration des Sternnetzes,
wobei die Management-Zeitschlitze verwendet werden, um zumindest Konfigurationen für das Sternnetz zu übertragen.

2. Beacon gemäß Anspruch 1,
**dadurch gekennzeichnet,** dass die Gateway-ID aus einer MAC-Adresse des Gateways (A; B; C) hergeleitet ist oder eine Zufallszahl ist oder durch ein Netz-Management-System vorgegeben wird.

3. Superframe für ein Sternnetz, wobei der Superframe ein Beacon gemäß einem der Ansprüche 1 bis 2 umfasst.

4. Superframe gemäß Anspruch 3,
**dadurch gekennzeichnet,** dass für jede Übertragungsrichtung ein Management-Zeitschlitz zur Verfügung steht und die Management-Zeitschlitze direkt nach dem Beacon angeordnet sind.

5. Superframe gemäß einem der Ansprüche 3 oder 4,
**dadurch gekennzeichnet**, dass ein Zugriff auf die Management-Zeitschlitze immer in einem CSMA-Verfahren erfolgt.

6. Sensorknoten (P; S; T) in einem Sternnetz, in welchem Beacons gemäß einem der Ansprüche 1 bis 2 versendbar sind, wobei der Sensorknoten (P; S; T) eine Datenstruktur für die Speicherung einer Konfiguration des Sternnetzes hat, welche folgende Attribute aufweist:
- eine Gateway-ID der Konfiguration und
- eine Konfigurationssequenznummer der Konfiguration; und
wobei der Sensorknoten (P; S; T) weiterhin technische Mittel aufweist zum:
- Empfangen der Beacons von einem Gateway (A; B; C);
- Vergleichen der empfangenen Gateway-ID und Konfigurationssequenznummer (KSN) mit den entsprechenden Werten der aktuellen Konfiguration des Sensorknotens (P; S; T);
- Verwenden der aktuellen Konfiguration des Sensorknotens (P; S; T), falls der Sensorknoten (P; S; T) eine Übereinstimmung feststellt;
- Durchsuchen der in dem jeweiligen Sensorknoten (P; S; T) abgespeicherten Konfigurationen, ob eine für die Gateway-ID und die Konfigurationssequenznummer (KSN) entsprechende Konfiguration vorliegt und, falls eine solche Konfiguration vorliegt, Verwenden dieser Konfiguration.

7. Sensorknoten nach Anspruch 6,
**dadurch gekennzeichnet,** dass die Datenstruktur k ≥ 1 Konfigurationen abspeichern kann und insbesondere als Liste oder Feld organisiert ist.

8. Sternnetz mit einem Gateway und mehreren Sensorknoten (P, S, T) gemäß einem der Ansprüche 6 oder 7.

9. Sternnetz gemäß Anspruch 8, wobei der Gateway (A; B; C) technische Mittel zur Bestimmung der Startwerte für eine Gateway-ID und einer Konfigurationssequenznummer (KSN) aufweist.

10. Sternnetz nach Anspruch 9,
**dadurch gekennzeichnet,** dass die technischen Mittel zur Bestimmung des Startwerts dazu ausgebildet sind, als Startwert für die Gateway-ID einen zufälligen Wert oder ein letztes Oktet einer MAC-Adresse des Gateways (A; B; C) zu verwenden.

11. Sternnetz nach Anspruch 9,
**dadurch gekennzeichnet,** dass die technischen Mittel zur Bestimmung des Startwerts dazu ausgebildet sind, den Startwert für die Gateway-ID durch ein Network Management System festzulegen.

12. Sternnetz nach Anspruch 9,
**dadurch gekennzeichnet,** dass die technischen Mittel zur Bestimmung des Startwerts dazu ausgebildet sind, einen verteilten Algorithmus zur Erkennung von Duplikaten bei der Gateway-ID oder zur duplikatfreien Zuweisung einer Gateway-ID einzusetzen.

13. Verfahren zum Betrieb eines Sternnetzes gemäß Anspruch 8, mit einem Gateway (A; B; C) und mehreren Sensorknoten (P, S, T), mit folgenden Schritten:
- Empfangen von Beacons von dem Gateway (A; B; C) durch die Sensorkonten, wobei die Beacons eine Gateway-ID und eine Konfigurationssequenznummer (KSN) umfassen,
- Vergleichen der empfangenen Gateway-ID und Konfigurationssequenznummer (KSN) mit den entsprechenden Werten der aktuellen Konfiguration des jeweiligen Sensorknotens (P; S; T),
- falls ein Sensorknoten (P; S; T) eine Übereinstimmung feststellt, Verwenden der aktuellen Konfiguration des jeweiligen Sensorknotens (P; S; T), und
- falls ein Sensorknoten (P; S; T) keine Übereinstimmung feststellt, Durchsuchen der im jeweiligen Sensorknoten (P; S; T) abgespeicherten Konfigurationen dahingehend, ob eine für die Gateway-ID und die Konfigurationssequenznummer (KSN) entsprechende Konfiguration vorliegt und Verwenden dieser Konfiguration, falls dies der Fall ist.

14. Verfahren nach Anspruch 13, mit folgendem weiteren Schritt:
- Nutzen eines Management-Zeitschlitzes, um den Gateway (A; B; C) über eine fehlende Konfiguration zu informieren, falls keine Übereinstimmung der empfangenen Gateway-ID und Konfigurationssequenznummer (KSN) mit den entsprechenden Werten der aktuellen Konfiguration des Sensorknotens (P; S; T) festgestellt wird und in dem Sensorknoten (P; S; T) keine für die Gateway-ID und die Konfigurationssequenznummer (KSN) entsprechende Konfiguration gespeichert ist.

## Claims

1. Beacon for a star network comprising a gateway (A; B; C) and at least one sensor node (P; S; T), wherein the beacon has fields which contain
- information on a length of a base timeslot,
- information on the number of base timeslots used per management timeslot,
- a gateway ID as an identifier for the gateway (A; B; C) of a star network and
- a configuration sequence number (KSN) as an identifier for a current configuration of the star network,
wherein the management timeslots are used in order to transmit at least configurations for the star network.

2. Beacon according to claim 1,
**characterised in that** the gateway ID is derived from a MAC address of the gateway (A; B; C) or is a random number or is predefined by a network management system.

3. Superframe for a star network, wherein the superframe comprises a beacon according to one of claims 1 to 2.

4. Superframe according to claim 3,
**characterised in that** a management timeslot is available for each transmission direction and the management timeslots are arranged directly after the beacon.

5. Superframe according to claim 3 or 4,
**characterised in that** access to the management timeslots is always carried out in a CSMA method.

6. Sensor node (P; S; T) in a star network, in which beacons according to one of claims 1 to 2 can be sent, wherein the sensor node (P; S; T) has a data structure for storing a configuration of the star network, which data structure has the following attributes:
- a gateway ID of the configuration and
- a configuration sequence number of the configuration; and
wherein the sensor node (P; S; T) has further technical means for:
- reception of beacons from a gateway (A; B; C);
- comparison of the received gateway ID and configuration sequence number (KSN) with the corresponding values of the current configuration of the sensor node (P; S; T);
- use of the current configuration of the sensor node (P; S; T), if the sensor node (P; S; T) establishes a match;
- searching of the configurations stored in the respective sensor node (P; S; T) to ascertain whether there is an appropriate configuration for the gateway ID and the configuration sequence number (KSN) and, if such a configuration is present, use of this configuration.

7. Sensor node according to claim 6,
**characterised in that** the data structure can store k ≥ 1 configurations and is organised in particular as a list or a field.

8. Star network comprising a gateway and multiple sensor nodes (P, S, T) according to claim 6 or 7.

9. Star network according to claim 8, wherein the gateway (A; B; C) has technical means for determining the start values for a gateway ID and a configuration sequence number (KSN).

10. Star network according to claim 9, **characterised in that** the technical means for determining the start value are embodied so as to use a random value or a final octet of a MAC address of the gateway (A; B; C) as a start value for the gateway ID.

11. Star network according to claim 9, **characterised in that** the technical means for determining the start value are embodied so as to stipulate the start value for the gateway ID by means of a network management system.

12. Star network according to claim 9, **characterised in that** the technical means for determining the start value are embodied so as to use a distributed algorithm for recognising gateway ID duplicates or for assigning a duplicate-free gateway ID.

13. Method for operating a star network according to claim 8, having a gateway (A; B; C) and multiple sensor nodes (P; S; T), comprising the following steps
- reception of beacons from the gateway (A; B; C) by the sensor nodes, wherein the beacons comprise a gateway ID and configuration sequence number (KSN),
- comparison of the received gateway ID and configuration sequence number (KSN) with the corresponding values of the current configuration of the respective sensor node (P; S; T),
- if a sensor node (P; S; T) establishes a match, use of the current configuration of the respective sensor node (P; S; T), and
- if a sensor node (P; S; T) establishes no match, searching of the configurations stored in the respective sensor node (P; S; T) to ascertain whether there is an appropriate configuration for the gateway ID and the configuration sequence number (KSN) and use of this configuration if this is the case.

14. Method according to claim 13, comprising the following additional step,
- use of a management timeslot in order to inform the gateway (A; B; C) about a missing configuration if no match of the received gateway ID and configuration sequence number (KSN) with the corresponding values of the current configuration of the sensor node (P; S; T) is determined and no configuration corresponding to the gateway ID and the configuration sequence number is stored in the sensor node (P; S; T).

## Revendications

1. Balise pour un réseau en étoile comportant une passerelle (A ; B ; C) et au moins un noeud capteur (P ; S ; T), la balise présentant des champs qui contiennent :
- une information sur une longueur d'un créneau temporel de base ;
- une information sur le nombre des créneaux temporels de base utilisés pour chaque créneau temporel de gestion ;
- un ID de passerelle en tant qu'identificateur de la passerelle (A ; B ; C) d'un réseau en étoile et
- un numéro séquentiel de configuration (KSN) en tant qu'identificateur pour une configuration actuelle du réseau en étoile,
les créneaux temporels de gestion étant utilisés pour transmettre au moins des configurations pour le réseau en étoile.

2. Balise selon la revendication 1, **caractérisée en ce que** l'ID de passerelle est dérivé d'une adresse MAC de la passerelle (A ; B ; C) ou est un nombre aléatoire ou est imposé par un système de gestion de réseau.

3. Supertrame pour un réseau en étoile, la supertrame comprenant une balise selon l'une des revendications 1 à 2.

4. Supertrame selon la revendication 3, **caractérisée en ce qu'**un créneau temporel de gestion est disponible pour chaque sens de transmission et **en ce que** les créneaux temporels de gestion sont situés directement après la balise.

5. Supertrame selon l'une des revendications 3 ou 4, **caractérisée en ce qu'**un accès aux créneaux temporels de gestion s'effectue toujours dans un procédé CSMA.

6. Noeud capteur (P ; S ; T) dans un réseau en étoile, dans lequel des balises selon l'une des revendications 1 à 2 peuvent être envoyées, le noeud capteur (P ; S ; T) ayant une structure de données pour le stockage d'une configuration du réseau en étoile, laquelle présente les attributs suivants :
- un ID de passerelle de la configuration et
- un numéro séquentiel de configuration de la configuration ; et
le noeud capteur (P ; S ; T) présentant en outre des moyens techniques pour :
- recevoir les balises d'une passerelle (A ; B ; C) ;
- comparer l'ID de passerelle reçu et le numéro séquentiel de configuration (KSN) avec les valeurs correspondantes de la configuration actuelle du noeud capteur (P ; S ; T) ;
- utiliser la configuration actuelle du noeud capteur (P ; S ; T) au cas où le noeud capteur (P ; S ; T) constate une coïncidence;
- chercher parmi les configurations sauvegardées dans le noeud capteur respectif (P ; S ; T) s'il y a une configuration appropriée pour l'ID de passerelle et le numéro séquentiel de configuration (KSN) et, en présence d'une telle configuration, utiliser cette configuration.

7. Noeud capteur selon la revendication 6, **caractérisé en ce que** la structure de données peut sauvegarder k ≥ 1 configurations et est plus particulièrement organisée en tant que liste ou champ.

8. Réseau en étoile comportant une passerelle et plusieurs noeuds capteurs (P, S, T) selon l'une des revendications 6 ou 7.

9. Réseau en étoile selon la revendication 8, la passerelle (A ; B ; C) comportant des moyens techniques pour déterminer les valeurs de départ d'un ID de passerelle et d'un numéro séquentiel de configuration (KSN).

10. Réseau en étoile selon la revendication 9, **caractérisé en ce que** les moyens techniques pour déterminer la valeur de départ sont conçus pour utiliser, en tant que valeur de départ de l'ID de passerelle, une valeur aléatoire ou un dernier octet d'une adresse MAC de la passerelle (A ; B ; C).

11. Réseau en étoile selon la revendication 9, **caractérisé en ce que** les moyens techniques pour déterminer la valeur de départ sont conçus pour fixer la valeur de départ de l'ID de passerelle par un système de gestion de réseau.

12. Réseau en étoile selon la revendication 9, **caractérisé en ce que** les moyens techniques pour déterminer la valeur de départ sont conçus pour mettre en oeuvre un algorithme distribué pour identifier des doubles dans le cas de l'ID de passerelle ou pour affecter un ID de passerelle sans double.

13. Procédé d'exploitation d'un réseau en étoile selon la revendication 8 présentant une passerelle (A ; B ; C) et plusieurs noeuds capteurs (P, S, T), comportant les étapes suivantes :
- réception de balises de la passerelle (A ; B ; C) par les noeuds capteurs, les balises comprenant un ID de passerelle et un numéro séquentiel de configuration (KSN) ;
- comparaison de l'ID de passerelle reçu et du numéro séquentiel de configuration (KSN) avec les valeurs correspondantes de la configuration actuelle du noeud capteur respectif (P ; S ; T) ;
- si un noeud capteur (P ; S ; T) constate une coïncidence, utilisation de la configuration actuelle du noeud capteur respectif (P ; S ; T) et,
- si un noeud capteur (P ; S ; T) ne constate aucune coïncidence, recherche, parmi les configurations sauvegardées dans le noeud capteur respectif (P ; S ; T), pour établir s'il y a une configuration appropriée pour l'ID de passerelle et le numéro séquentiel de configuration (KSN) et, si tel est le cas, utilisation de cette configuration.

14. Procédé selon la revendication 13, comportant l'étape supplémentaire suivante :
- utiliser un créneau temporel de gestion pour informer la passerelle (A ; B ; C) d'une configuration manquante s'il n'est constaté aucune coïncidence de l'ID de passerelle reçu et du numéro séquentiel de configuration (KSN) avec les valeurs correspondantes de la configuration actuelle du noeud capteur (P ; S ; T) et si aucune configuration appropriée pour l'ID de passerelle et le numéro séquentiel de configuration (KSN) n'est stockée dans le noeud capteur (P ; S ; T).
